# EUROPÄISCHE PATENTANMELDUNG

(11) **EP 3 892 440 A1**
(43) Veröffentlichungstag der Anmeldung: **13.10.2021**
(21) Anmeldenummer: 21167459.3
(22) Anmeldetag: 08.04.2021
(51) Int. Cl.: B29C 45/76, B29C 45/77

(54) **VERFAHREN ZUR EINSTELLUNG EINER SPRITZGIESSMASCHINE**

(30) Priorität: 09.04.2020 DE 102020109947
(71) Anmelder: Arburg GmbH + Co KG, 72290 Loßburg (DE)
(72) Erfinder: Duffner, Eberhard, 72181 Starzach (DE); Schmid, Gunther, 72108 Rottenburg am Neckar (DE)
(74) Vertreter: RPK Patentanwälte Reinhardt, Pohlmann und Kaufmann Partnerschaft mbB

(57) **Zusammenfassung**

Ein Verfahren zur Einstellung von wenigstens einem Parameterprofil zur Steuerung einer in Zyklen arbeitenden Spritzgießmaschine zur Verarbeitung von plastifizierbaren Materialien weist die Schritte auf:
- Bereitstellen und/oder Auswählen wenigstens eines 3D-Modells wenigstens einer Geometrie wenigstens eines zu spritzenden Spritzteils und/oder wenigstens einer Geometrie wenigstens eines Formhohlraums,
- Bereitstellen und/oder Auswählen wenigstens eines Simulationsprogramms zur Simulation der Herstellung des wenigstens einen Spritzteils auf der Spritzgießmaschine und/oder der Füllung des wenigstens einen Formhohlraums,
- Bereitstellen und/oder Auswählen wenigstens eines Spritzgießmaterials mit wenigstens einem Verarbeitungsparameter,
- Durchführen wenigstens einer Simulation bezüglich der wenigstens einen Geometrie mittels des Simulationsprogramms.

Wenigstens ein maschinenunabhängiges Prozessparameterprofil wird aus der Simulation in Abhängigkeit des Spritzgießmaterials berechnet, wobei der berechnete Prozessparameter für einen "idealisierten" Spritzgießprozess auf einer "idealen" Spritzgießmaschine konfiguriert ist. Dann wird das wenigstens eine maschinenunabhängige Prozessparameterprofil in wenigstens einen maschinenspezifischen Einstellparameter für eine Voreinstellung des wenigstens einen Parameterprofils zur Steuerung einer realen Spritzgießmaschine unter Anwendung eines Konstruktions- und Maschinen-Expertenwissens umgerechnet, das die konstruktiven Besonderheiten und/oder Beschränkungen der realen Spritzgießmaschine berücksichtigt, und die reales Spritzgießmaschine entsprechend betrieben. Dadurch wird es dem Bediener ermöglicht, schnell und einfach die aus der Simulation gewonnenen Ergebnisse für die Einstellung der Spritzgießmaschine für den nächsten Spritzvorgang zu verwenden.

## Beschreibung

Die Erfindung betrifft ein Verfahren zur Einstellung einer Spritzgießmaschine nach dem Oberbegriff des Anspruches 1.

Unter einem "Simulationsprogramm" wird im Sinne dieser Anmeldung ein Programm verstanden, welches für einen Spritzgießprozesses eine Simulation durchführt. Beispielsweise kann es sich um ein Fließfrontsimulationsprogramm, ein Füllsimulationsprogramm oder ein Programm handeln, welches die komplette Spritzgießmaschine und/oder Teile davon und ggf. auch Peripheriegeräte simuliert. Beispielsweise können mit einem Simulationsprogramm der Schneckenweg, verschiedene Drücke und Temperaturen simuliert werden. Auch ist es denkbar, dass ein Werkzeug und/oder ein Material mit dem Simulationsprogramm simuliert wird. Es ist auch möglich, dass das Simulationsprogramm mehrere oder alle diese Simulationen enthält. Als Ergebnis des Simulationsprogramms lassen sich z.B. eine Simulation des Spritzgießprozesses, die resultierenden Bauteileigenschaften und/oder eine Simulation der Prozessparameter in Bezug auf die Auswirkungen auf die Produktionsanlage bezüglich z.B. Auslastung, Energieverbrauch, Zykluszeit und/oder Verschleiß erhalten.

"Verarbeitungsparameter" betreffen im Sinne dieser Anmeldung das Spritzgießmaterial und geben charakteristische Größen des verwendeten Materials an, z.B. Fließindex, Schmelztemperatur, Dichte, Wärmekapazität, Ausdehnungskoeffizient.

"Prozessparameter" betreffen im Rahmen dieser Anmeldung allgemein Parameter, die für den Spritzgießprozess auf einer realen Anlage, wie z.B. auf einer Spritzgießmaschine zur Verarbeitung von Kunststoffen, verwendet werden. Es handelt sich dabei in der Regel um Soll- und Istwerte aus der Anlage, z.B. unter anderem um Drücke, Wege oder Bewegungszeiten von Komponenten der Spritzgießmaschine, Zykluszeiten, Volumina oder Temperaturen. Der Spritzgießprozess hängt dabei zum einen von der verwendeten Spritzgießmaschine und zum anderen von dem zu spritzenden Spritzteil bzw. dem Formhohlraum bzw. Spritzgießwerkzeug sowie dem zu verarbeitenden Material ab.

Ein "Prozessparameterprofil" ist im Rahmen dieser Anmeldung ein Profil eines Prozessparameters über einen anderen Parameter wie insbesondere über die Zeit oder den Weg eines Fördermittels zum Fördern von plastifiziertem Material in den Formhohlraum eines Spritzgießwerkzeugs.

Unter einer "idealen Spritzgießmaschine" wird im Rahmen dieser Anmeldung eine Spritzgießmaschine verstanden, die keine Begrenzungen hinsichtlich verschiedener Prozessparameter wie z.B. Drücken, Geschwindigkeiten, oder Temperaturen aufweist, insbesondere keine Begrenzungen, die sich auf den Spritzgießprozess auswirken können. Dies bedeutet z.B., dass die Simulation eines bestimmten Spritzteils eine "idealisierte" simulierte Zykluszeit von z.B. 3 Sekunden ergeben kann, ohne dass dabei gegengeprüft wird, ob die verwendete "reale" Spritzgießmaschine diese Zykluszeit überhaupt erreichen kann.

Unter einem "idealisierten Spritzgießprozess" wird im Rahmen dieser Anmeldung ein Spritzgießprozess verstanden, bei dem die Simulation einen maschinenunabhängigen, vom Spritzgießmaterial abhängigen Parameter für einen Spritzgießprozess zur Ausführung auf einer "idealen" Spritzgießmaschine berechnet.

"Maschinenunabhängige Prozessparameter" sind im Rahmen dieser Anmeldung Parameter, die zunächst ohne eine Einschränkung hinsichtlich der tatsächlich verwendeten Spritzgießmaschine berechnet werden. Beispiele für maschinenunabhängige Prozessparameter sind der geometrische Verlauf der Fließfront des Materials im Werkzeug, das Gesamtvolumen des Formhohlraums, notwendige Fließdrücke in Bezug auf den Angusspunkt, Nachdruckhöhen, um die Schwindung des Materials beim Erkalten auszugleichen, Nachdruck- und Kühlzeiten, bis das Material unter den Erstarrungspunkt gekühlt ist.

Unter "Einstellparametern" werden im Rahmen dieser Anmeldung Einstellmöglichkeiten z.B. an der Maschinensteuerung verstanden, welche den Spritzgießprozess und/oder seine Prozessparameter beeinflussen und/oder steuern.

Eine "Fließfront" bezeichnet im Rahmen dieser Anmeldung die Front, bis zu der beim Einspritzen von Spritzgießmaterial in einen Formhohlraum das Spritzgießmaterial bereits vorgedrungen ist.

Ein "Fließfrontverlauf" bezeichnet damit im Rahmen dieser Anmeldung z.B. eine Anzeige des oder den sich beim Einspritzen über die Zeit entwickelnden Verlauf der Fließfront des Spritzgießmaterials im Formhohlraum. Es kann sich dabei um eine grafische Darstellung handeln, z.B. auf der Maschinensteuerung und/oder auf einem Bildschirm. Es sind jedoch auch andere Darstellungsmöglichkeiten denkbar wie z.B. eine Darstellung mittels eines Balkendiagramms, Prozentangaben und/oder Pfeilen.

Eine "Real-Time Darstellung" ist im Rahmen dieser Anmeldung eine zeitgetreue Darstellung, z.B. auf der Maschinensteuerung und/oder einem Bildschirm, insbesondere der Herstellung eines Spritzteils und/oder der Füllung eines Formhohlraums.

Unter einem "Konstruktions- und Maschinen-Expertenwissen" werden im Rahmen dieser Anmeldung Kenntnisse zusammengefasst, die den Aufbau einer konkreten Spritzgießmaschine oder -anlage mit ihren jeweiligen Ausbaugrad, aber auch den Spritzgießprozess und die damit verbundenen Zusammenhänge umfassen. So werden die speziellen Charakteristika der tatsächlich verwendeten Spritzgießmaschine wie z.B. Prozessparametergrenzen verwendet, in denen die tatsächlich verwendete reale Spritzgießmaschine arbeiten kann und welche bevorzugt in diesem Expertenwissen vorliegen. Es kann sich also z.B. um konstruktive Daten und/oder eingestellte Parameter handeln wie den Durchmesser der Schnecke, den Hub der Rückstromsperre, die Verteilung der Zylindertemperaturen und/oder die Voreinstellung des Staudrucks und der Dosierdrehzahl. So lassen sich z.B. mit dem Schneckendurchmesser und dem Hub der Rückstromsperre der Dosierweg und der Dekompressionsweg als Einstellparameter erhalten. Auch lassen sich z.B. mit der Verteilung der Zylindertemperaturen auf verschiedene Zonen und Wissen über die Modellzusammenhänge von Schneckengeometrie zur Schmelztemperatur beim Dosieren zusammen mit der Voreinstellung des Staudrucks und der Dosierdrehzahl Einstellparameter erhalten. Dieses Expertenwissen kann z.B. als Datenbank auf der Maschinensteuerung oder in einem Netzwerk vorliegen.

Um z.B. Bedienpersonal an Spritzgießmaschinen zu schulen, ist bekannt, Spritzgießmaschinen und/oder Spritzgießanlagen zu simulieren. Es lässt sich so das Verhalten der Spritzgießmaschine studieren sowie ein Spritzgießprozess vorab testen, ohne dass dafür eine reale Maschine und/oder Material benötigt wird und die Maschine ggf. bei einer falschen Bedienung beschädigt wird. Im verallgemeinerten Sinne spricht man hierbei von einem digitalen Zwilling der Maschine oder Anlage.

Weiterhin sind Spritzgießprozesssimulationen bekannt, bei welchen mittels eines Simulationsprogramms das Spritzgießwerkzeug z.B. als 3D-Modell bereitgestellt wird und der Formgebungsprozess des Spritzteils simuliert wird. In solch einer Simulation wird versucht, den abstrahierten Prozess meist in einer quasistatischen Rechnung zum fertigen Spritzteil zu simulieren und im Voraus zu berechnen. Die errechneten Verarbeitungsparameter bilden meist quasistatische Prozessbedingungen ab, wie z.B. eine über die Zeit konstante Werkzeugwandtemperatur, ein konstanter Nachdruck oder eine summarische Gesamtfüllzeit. Im realen Prozess auf der Anlage sind diese Prozessbedingungen in dieser Form nicht direkt abbildbar und von vielen weiteren anlagen- und umgebungsbedingten Faktoren abhängig.

Aus der dem Oberbegriff des Anspruches 1 zugrunde liegenden WO 2017/004300 A1 ist ein Verfahren zum Spritzgießen mit einer konstanten Fließfrontgeschwindigkeitsregelung bekannt. Auf der Grundlage der bekannten Formhohlraumgeometrie wird mittels einer Simulationssoftware ein Bewegungsprofil des Fördermittels oder ein Schmelzdruckprofil zur Erzielung der gewünschten konstanten Fließfrontgeschwindigkeit berechnet. Die Simulation erfolgt basierend auf der Geometrie und ggf. dem Material, um im Anschluss eine unmittelbare Übertragung an die reale Maschine vorzunehmen. Dies erfolgt ohne Berücksichtigung der Randbedingungen bzw. Beschränkungen der konkrete/n Maschine.

Aus der DE 10 2013 016 914 A1 ist ein Verfahren zur Simulation eines Spritzvorgangs offenbart, wobei in einer Maschinensimulation eine Spritzgießmaschine nachgebildet wird. Weiter wird eine Prozesssimulation durchgeführt, in der das Spritzgießwerkzeug und/oder das Spritzgießmaterial nachgebildet werden. Ein erster Parameter wird mit Hilfe der Maschinensimulation berechnet, während ein zweiter Parameter in der Prozesssimulation berechnet wird. Der erste Parameter wird dann der Prozesssimulation mitgeteilt und/oder der zweite Parameter wird der Maschinensimulation mitgeteilt, d.h. die Ergebnisse der beiden Simulationen werden untereinander ausgetauscht.

In der US 2004/0140579 A1 ist ein Verfahren zur Analyse von Einspritzbedingungen offenbart. Zunächst werden Werkzeugformdaten des Werkzeuges bzgl. der Kavität bereitgestellt und eine Spritzgießmaschine mathematisch definiert. Danach werden die Fließcharakteristik während des Prozesses im Werkzeug sowie Fließcharakteristiken der Schmelze im Werkzeug berechnet, wobei Materialkennwerte sowie die Düsengeometrie miteinbezogen werden.

Eine Anpassung des Einspritzprofils an veränderte Materialeigenschaften ist aus der US 5,178,805 A1 offenbart. Durch die Verwendung realer Messdaten wird aufgrund einer Änderung des Volumens des Materials bezüglich Temperatur und Druck das Einspritzprofil bzw. die Einspritzgeschwindigkeit angepasst.

In der US 2001/0051858 A1 werden verschiedene Simulationen mit Hilfe einer Analysesoftware für einen bestimmten experimentellen Aufbau verwendet, um eine Datenbank für eine quantitative Analyse zwischen der verwendeten Spritzgießmaschine und den Parametern des Spritzteils zu entwickeln.

Aus der WO 2020/058387 A1 ist ein Verfahren dient zur Steuerung einer Maschine zur Verarbeitung von Kunststoffen bekannt, deren Maschinensteuerung mit einem Expertenwissen verbunden ist. Informationen über die Geometrie des Spritzteils und/oder des Formhohlraumes sowie der Angussgeometrie werden der Maschinensteuerung bereitgestellt, um wenigstens einen Einspritzprozess unter Berücksichtigung der Geometrieinformationen zu berechnen. Damit wird unter Berücksichtigung der Geometrieinformationen wenigstens ein schrittweises Volumenwachstumsprofil des Spritzteils in Füllrichtung des Formhohlraums berechnet.

In der DE 10 2015 107 024 B3 wird eine charakteristische formteilspezifische Druckkurve aus CAD-Daten ermittelt. Auf Basis der Druckkurve werden charakteristische formteilspezifische Ereignisstellen ermittelt. Anschließend erfolgt ein Spritzguss-Prozess, in dem eine Mess-Druckkurve ermittelt wird. Mit Hilfe der Mess-Druckkurve werden ebenfalls Mess-Ereignisstellen ermittelt, welche dann mit den charakteristischen formteilspezifischen Ereignisstellen abgeglichen bzw. entsprechend zugeordnet werden, sodass sich virtuelle Ereignisse ergeben. Aus diesen virtuellen Ereignissen werden dann Prozessparameterwerte abgeleitet.

Bei den Verfahren im Stand der Technik werden zwar einerseits Spritzgießmaschinen und andererseits auch Spritzgießprozesse simuliert, jedoch müssen die Ergebnisse der Simulationen zumeist in einem weiteren Schritt aufwendig miteinander verknüpft werden, damit die Ergebnisse untereinander kompatibel und verwendbar sind. Dies erfordert in aller Regel einen weiteren Schritt sowie spezielles Knowhow zum Verwenden der Simulationsergebnisse zur Einstellung einer Spritzgießmaschine.

Ausgehend von diesem Stand der Technik liegt der vorliegenden Erfindung die Aufgabe zugrunde, ein Verfahren zur Steuerung einer Spritzgießmaschine bereitzustellen, welches es dem Bediener ermöglicht, schnell und einfach Ergebnisse aus einer Simulation für die Einstellung der Spritzgießmaschine für einen Spritzvorgang zu verwenden.

Diese Aufgabe wird durch ein Verfahren mit den Merkmalen des Anspruches 1 gelöst. Vorteilhafte Weiterbildungen sind Gegenstand der abhängigen Ansprüche. Die in den Ansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Das Verfahren zur Einstellung von wenigstens einem Parameterprofil zur Steuerung einer in Zyklen arbeitenden Spritzgießmaschine zur Verarbeitung von Kunststoffen und anderer plastifizierbarer Materialien wie z.B. metallische und pulverförmige Massen weist die folgenden Schritte auf: Zunächst wird wenigstens ein 3D-Modell wenigstens einer Geometrie wenigstens eines zu spritzenden Spritzteils und/oder wenigstens einer Geometrie wenigstens eines Formhohlraums bereitgestellt und/oder ausgewählt. Beispielsweise kann das 3D-Modell Informationen über die Kavitäten des Werkzeugs (z.B. die Anzahl der Teile im Werkzeug), den Angusspunkt, den Angussverteiler, das Auswerfersystem, die Kühlkreise und/oder das Heißkanalsystem umfassen. Prinzipiell sind auch weitere Daten hinsichtlich des 3D-Modells denkbar. Z.B. kann eine mathematische Beschreibung der zu spritzenden Geometrie des zu spritzenden Spritzteils einschließlich des Angusspunktes sowie der Heißkanäle erfolgen. Auch kann das 3D-Modell als Datei z.B. in eine Maschinensteuerung der Spritzgießmaschine vorzugweise über eine Schnittstelle geladen werden, über ein Netzwerk bereitgestellt werden oder bereits z.B. an der Maschine direkt oder auf einem externen Datenträger verfügbar sein und ausgewählt werden.

Ein Simulationsprogramm zur Simulation der Herstellung des wenigstens einen Spritzteils auf der Spritzgießmaschine und/oder der Füllung des wenigstens einen Formhohlraums wird bereitgestellt und/oder z.B. über eine Schnittstelle ausgewählt. Bei dem Simulationsprogramm kann es sich z.B. um ein Füllsimulationsprogramm, z.B. Cadmould, handeln, welches die Füllung des Formhohlraums simuliert. Es kann sich dabei um ein Programm handeln, dass die Fließfront im Formhohlraum grafisch darstellt. Es sind jedoch auch andere Darstellungsformen möglich.

Auch sind verschiedene Simulationsprogramme denkbar, die die Simulation mit den entsprechenden Programmen entsprechend analytisch, grafisch und/oder numerisch durchführen.

Das Simulationsprogramm kann z.B. an der Maschine bereits verfügbar sein und/oder aus mehreren Simulationsprogrammen bevorzugt über eine Schnittstelle ausgewählt werden. Auch ist es denkbar, dass das Simulationsprogramm über einen externen Datenträger und/oder über ein Netzwerk bereitgestellt und/oder ausgewählt wird. Prinzipiell kann das Simulationsprogramm auch auf der Maschinensteuerung vorhanden sein. Bevorzugt lässt sich die Simulation manuell oder automatisch starten, z.B. nach Bereitstellung des 3D-Modells.

Bevorzugt kann das Simulationsprogramm berücksichtigen, wie z.B. die Kühlung gestaltet ist, z.B. als eine Werkzeugwand mit konstanter Temperatur. Die meisten Kühlungen sind jedoch komplexer und weisen z.B. mehrere Kühlkanäle auf, sodass das Simulationsprogramm auch komplexere Kühlungen berücksichtigen und abbilden kann.

Auch kann das Simulationsprogramm weiter bevorzugt z.B. Wärmeübergänge berücksichtigen. So wird z.B. bei einer dickeren Wand eine stärke Kühlung benötigt.

Das Simulationsprogramm adressiert noch weiter bevorzugt z.B. die Frage nach der Wärmeleitungsthematik und/oder die Frage nach der Abführung der Wärme. Denkbar sind jedoch auch andere Fragestellungen wie z.B. Fragen hinsichtlich des Drucks.

Auch kann weiter bevorzugt z.B. eine Wärme-Differentialgleichung (DGL) mit Randbedingungen durch das Simulationsprogramm gelöst werden. Die Lösung der DGL kann z.B. als ein Matrixsystem berechnet werden, wobei die Koeffizienten z.B. zeit- und/oder temperaturabhängig sind.

Ebenfalls werden Informationen über ein Spritzgießmaterial mit wenigstens einem Verarbeitungsparameter bereitgestellt und/oder ausgewählt. Z.B. kann das Spritzgießmaterial mit einem im Datenblatt des Spritzgießmaterials beschriebenen typischen Verarbeitungsparameter für den Spritzgießprozess bereitgestellt und/oder ausgewählt werden. Auch hier kann die Information über das Spritzgießmaterial bereits an der Maschine verfügbar sein und z.B. über eine Schnittstelle ausgewählt werden. Ebenfalls könnte die Information über das Spritzgießmaterial z.B. mit Hilfe eines externen Datenträgers und/oder über ein Netzwerk bereitgestellt werden.

Anschließend wird wenigstens eine Simulation bezüglich der wenigstens einen Geometrie mittels des Simulationsprogramms durchgeführt. Z.B. stellt der Bediener ein 3D-Modell zur Verfügung, indem er es in die Maschinensteuerung der Spritzgießmaschine als Datei z.B. aus einem Netzwerk herunterlädt und/oder von dort auswählt. Gleiches gilt auch für das Bereitstellen und/oder Auswählen der Informationen über das Spritzgießmaterial. Danach wird z.B. das an der Spritzgießmaschine verfügbare Simulationsprogramm gestartet oder es wird ein anderes Simulationsprogramm der Maschine verfügbar gemacht und/oder ausgewählt, welches dann eine Simulation anhand des 3D-Modells und in Abhängigkeit des Spritzgießmaterials durchführt.

Eine mögliche Ausgabe des Simulationsprogramms ist z.B. der geometrische Verlauf der Fließfront des Materials im Werkzeug, wobei die Fließfront vorzugsweise mit Hilfe eines theoretischen Volumenstroms berechnet wird. Andere Ausgaben des Simulationsprogramms können z.B. das Gesamtvolumen des Formhohlraums, notwendige Fließdrücke in Bezug auf den Angusspunkt, Nachdruckhöhen, um die Schwindung des Materials beim Erkalten auszugleichen, Nachdruck- und Kühlzeiten, bis das Material unter den Erstarrungspunkt gekühlt ist, in Abhängigkeit von vorgegebenen Werkzeugtemperaturen sein.

Um vorteilhaft dem Bediener die Ergebnisse aus der Simulation direkt zur Verfügung zu stellen und diese zur Einstellung der Spritzgießmaschine schnell und einfach verwenden zu können, wird aus der Simulation wenigstens ein maschinenunabhängiges Prozessparameterprofil in Abhängigkeit des Spritzgießmaterials berechnet, wobei der berechnete Prozessparameter für einen "idealisierten" Spritzgießprozess auf einer "idealen" Spritzgießmaschine konfiguriert ist. Mögliche maschinenunabhängige Prozessparameter sind zum Beispiel der geometrische Verlauf der Fließfront des Materials im Werkzeug, das Gesamtvolumen des Formhohlraums, notwendige Fließdrücke in Bezug auf den Angusspunkt, Nachdruckhöhen, um die Schwindung des Materials beim Erkalten auszugleichen, Nachdruck- und Kühlzeiten, bis das Material unter den Erstarrungspunkt gekühlt ist.

Maschinenunabhängig heißt in diesem Zusammenhang, dass die Prozessparameter nicht durch Begrenzungen einer realen Spritzgießmaschine beschränkt und/oder vorgegeben sind. Die mittels der Simulation berechneten maschinenunabhängigen Prozessparameter stellen daher einen "idealisierten" (und damit meist auch optimalen) Spritzgießprozess dar, welcher auf einer "idealen" Spritzgießmaschine ausgeführt werden könnte. Das bedeutet, dass die "ideale" Spritzgießmaschine keine Begrenzungen hinsichtlich verschiedener Prozessparameter wie z.B. Drücken, Geschwindigkeiten oder Temperaturen hat. Beispielsweise ergibt die Simulation eines bestimmten Spritzteils eine "idealisierte" Zykluszeit von z.B. 3 Sekunden, ohne dass dabei gegengeprüft ist, ob die verwendete Spritzgießmaschine diese Zykluszeit überhaupt erreichen kann.

Im Anschluss wird das wenigstens eine maschinenunabhängige Prozessparameterprofil in wenigstens einen maschinenspezifischen Einstellparameter für eine Voreinstellung des wenigstens einen Parameterprofils zur Steuerung einer realen Spritzgießmaschine unter Anwendung eines Konstruktions- und Maschinen-Expertenwissens (Im Folgenden auch kurz "Expertenwissen") umgerechnet, das die konstruktiven Besonderheiten und/oder Beschränkungen der realen Spritzgießmaschine berücksichtigt. Für die Umrechnung werden die speziellen Charakteristika der tatsächlich verwendeten Spritzgießmaschine, z.B. Prozessparametergrenzen verwendet, in denen die tatsächlich verwendete Spritzgießmaschine arbeiten kann und welche bevorzugt z.B. in diesem Expertenwissen vorliegen. Dieses Expertenwissen kann z.B. als Datenbank auf der Maschinensteuerung oder in einem Netzwerk vorliegen.

Z.B. wird von der Simulation als maschinenunabhängiger Prozessparameter ein bestimmter Druck berechnet. Jedoch kann die tatsächlich verwendete Spritzgießmaschine lediglich einen geringeren Druck aufbringen. Es wird dann der maschinenunabhängige Prozessparameter mit Hilfe des Konstruktions- und Maschinen-Expertenwissens in einen maschinenspezifischen Einstellparameter umgerechnet. Z.B. erfolgt die Umrechnung so, dass der Einstellparameter die Parametergrenzen der tatsächlich verwendeten Spritzgießmaschine so berücksichtigt, dass bevorzugt z.B. die in der Simulation berechnete Gesamtspritzzeit als Randbedingung bestmöglich erreicht wird. Prinzipiell sind auch andere Randbedingungen möglich. Vorzugsweise gehen in die Umrechnung auch Informationen aus den bereitgestellten und/oder ausgewählten Informationen hinsichtlich des 3D-Modells bzw. der Geometrie des Formhohlraums und/oder des Spritzgießmaterials ein. Das Ergebnis der Umrechnung sind maschinenspezifische Einstellparameter, welche hinsichtlich der tatsächlich verwendeten Spritzgießmaschine, des zu spritzenden Formteils und/oder des verwendeten Spritzgießmaterials optimiert sind.

Mit der so ermittelten Voreinstellung des wenigstens einen Parameterprofils wird die reale Spritzgießmaschine betrieben, um das wenigstens eine Spritzteil herzustellen und/oder den wenigstens einen Formhohlraum zu füllen.

In anderen Worten findet ein Simulieren eines Herstellens eines Spritzteils mit einer bekannten Geometrie bzw. analog ein Befüllen eines Formhohlraums mit einem bekannten Material maschinenunspezifisch zur Bestimmung eines materialabhängigen, aber maschineunabhängigen Parameterverlaufs statt. Das Simulationsergebnis wird dann in einen Parameterverlauf konvertiert, jetzt jedoch maschinenabhängig für eine Voreinstellung des Parameterprofils. Dabei werden die Randbedingungen bzw. Beschränkungen der Realität oder, genauer gesagt, der realen Spritzgießmaschine berücksichtigt,

Bei dem Konstruktions- und Maschinen-Expertenwissen kann es sich z.B. um konstruktive Daten und oder eingestellte Parameter handeln wie den Durchmesser der Schnecke, den Hub der Rückstromsperre, die Verteilung der Zylindertemperaturen und/oder die Voreinstellung des Staudrucks und der Dosierdrehzahl. So lassen sich z.B. mit dem Schneckendurchmesser und dem Hub der Rückstromsperre der Dosierweg und der Dekompressionsweg als Einstellparameter erhalten. Auch ist es denkbar, z.B. mit der Verteilung der Zylindertemperaturen auf verschiedene Zonen und Wissen über die Modellzusammenhänge von Schneckengeometrie zur Schmelztemperatur beim Dosieren zusammen mit der Voreinstellung des Staudrucks und der Dosierdrehzahl Einstellparameter zu erhalten, die z.B. versuchen, den in der Simulation berücksichtigten idealisierten Fließindex des verwendeten Materials in der realen Materialschmelze auch in der Realität herzustellen.

Die aus der Umrechnung erhaltenen Werte können dann als Voreinstellung zur Steuerung der konkreten Maschine z.B. an der Maschinensteuerung verwendet werden. Um bei dem Beispiel von oben zu bleiben, ergibt die Umrechnung in maschinenspezifische Einstellparameter dann eine Zykluszeit von z.B. 6 Sekunden, da die tatsächlich verwendete Spritzgießmaschine aufgrund von z.B. baulichen Beschränkungen hinsichtlich ihrer Ausstattung eine Zykluszeit von 3 Sekunden nicht erreichen kann. Der von der Simulation in Abhängigkeit von der Geometrie des Formteils und/oder des verwendeten Spritzgießmaterials aufgespannte Prozessraum wird beim Umrechnen berücksichtigt bzw. nicht mehr verlassen.

Da bei der Simulation bevorzugt Informationen über das Spritzgießmaterial Eingang finden, kann auf die Besonderheiten des jeweiligen Materials eingegangen werden, so dass ein materialschonender Umgang gewährleistet wird, was sich in der Qualität der herzustellenden Spritzteile widerspiegelt. Z.B. werden die aufgrund der Schneckengeometrie und der Ausführung des Zylindermoduls vorhandenen Leistungsgrenzen in Bezug auf einen minimalen oder maximalen Materialdurchsatz für die Berechnung der Einstellparameter der realen Maschine berücksichtigt.

Mit Hilfe der Simulation lassen sich ferner bevorzugt Einstelländerungen ableiten, die z.B. zur Reduzierung oder Beseitigung von eventuell in der Simulation festgelegten bzw. festgestellten Problemstellen und Problemen führen. Weiterhin lassen sich Zielkriterien für die Simulation ansetzen und eine iterative Simulation zur Optimierung der Zielkriterien durchführen, z.B. eine Füllung mit gleichmäßiger Fließfrontgeschwindigkeit, Vermeidung von eingefrorenen Bereichen, Verhinderung von "short shots".

Bevorzugt erfolgt das Umrechnen des wenigstens einen maschinenunabhängigen Prozessparameter in wenigstens einen maschinenabhängigen Einstellparameter so, dass wenigstens ein Prozessparameter als Randbedingung bestmöglich erreicht wird. Z.B. kann der Bediener wenigstens eine Randbedingung vorgeben, z.B. über die Maschinensteuerung. Z.B. könnte der Bediener vor dem Umrechnen vorgeben, dass die Zykluszeit aus der Simulation bestmöglich erreicht werden soll. Die Umrechnung erfolgt in diesem Fall z.B. so, dass entsprechende Einstellparameter, welche die Zykluszeit beeinflussen, entsprechende Werte annehmen, z.B. die Geschwindigkeit der Schnecke. Bevorzugt werden bei der Umrechnung die Möglichkeiten der Spritzgießmaschine mittels des Expertenwissens beachtet. So lässt sich vorteilhaft der Spritzgießprozess je nach Wunsch des Bedieners bestmöglich einstellen.

Um vorteilhaft präzise Ergebnisse hinsichtlich der Simulation zu erhalten, wird bevorzugt mittels der Simulation ein Fließfrontverlauf des Spritzgießmaterials bezüglich der Geometrie mithilfe wenigstens eines Soll-Schmelze-Volumenstroms berechnet. Der Soll-Schmelze-Volumenstrom kann bevorzugt vom Bediener z.B. im Simulationsprogramm oder während der Simulation bereitgestellt und/oder ausgewählt werden. Es ist aber auch denkbar, dass automatisch ein Soll-Schmelze-Volumenstrom verwendet wird. Wird z.B. ein bestimmter Soll-Schmelze-Volumenstrom angegeben, ergibt die Simulation unter Einbeziehung des 3D-Modells und/oder des Spritzgießmaterials den entsprechenden Fließfrontverlauf, welcher, z.B. integriert über das komplette Volumen, die für die Füllung notwendige Zeit ergibt. Wird z.B. über die Zykluszeit integriert, ergibt sich das Volumen.

Bei dem Soll-Schmelze-Volumenstrom handelts es sich um das theoretisch aufgeprägte Massen-Volumenstromprofil (entsprechend der Soll-Einspritzgeschwindigkeit in cm³/s), z.B. berechnet durch Gesamtschussvolumen/Füllzeit, die erreicht werden soll. Er dient als Vorgabe eines aufgeprägten Schmelze-Volumenstroms in die Simulation aus dem Expertenwissen.

Bevorzugt ist vorgesehen, dass mittels des Fließfrontverlaufs ein Soll-Einspritzprofil berechnet wird. Das Soll-Einspritzprofil entsteht maschinenunabhängig, d.h. in der Praxis kann es später bevorzugt durch Randbedingungen und Möglichkeiten der Spritzgießmaschine beeinflusst und verändert werden. Auch könnte sich das Soll-Einspritzprofil aufgrund des verwendeten Spritzgießmaterials ändern. Dadurch lässt sich vorteilhaft schnell und einfach ein Vergleich eines realen Einspritzprofils mit dem berechneten Soll-Einspritzprofil durchführen. Bevorzugt korreliert dabei der berechnete Fließfrontverlauf mit dem berechneten Soll-Einspritzprofil. Das heißt, dass beispielweise bei einer bestimmten Fließfrontposition bzw. bei einem bestimmten Füllstand des Formhohlraums z.B. die Schneckenposition des Soll-Einspritzprofils ebenfalls die entsprechende dazugehörige Position anzeigt. Bevorzugt kann auch ein Soll-Einspritzgeschwindigkeitsprofil für eine Schnecke berechnet werden, das als Füllsimulation dargestellt werden kann. Entsprechend kann das berechnete Soll-Einspritzgeschwindigkeitsprofil für die Schnecke später mit einem realen Soll-Einspritzgeschwindigkeitsprofil für die Schnecke verglichen werden. Ebenfalls denkbar ist z.B. ein Soll-Einspritzdruckprofil.

Für eine übersichtliche Erfassung des Spritzgießprozesses durch den Bediener wird bevorzugt das Soll-Einspritzprofil auf der Maschinensteuerung als Füllsimulation dargestellt. Z.B. kann dargestellt werden, wie sich der Formhohlraum über die Zeit füllt bzw. wie sich die Fließfront über die Zeit bewegt. Daraus ergibt sich zum Beispiel eine Volumenmenge pro Zeiteinheit.

Zur anschaulichen und übersichtlichen Darstellung wird der mittels der Simulation berechnete Fließfrontverlauf mittels des Expertenwissens in eine Soll-Fließfrontausbreitungs-Geometrie mit wenigstens einem Darstellungsparameter, vorzugweise einem Soll-Schneckenweg, verrechnet und in der Maschinensteuerung zur Inline-Simulation dargestellt. Vorzugsweise kann dabei ein Interaktionselement, z.B. ein Schieberegler, vorgesehen sein, um auf die Darstellung und damit auch auf die Berechnung der Einstellparameter Einfluss zu nehmen. So lässt sich z.B. ein Füllgrad manuell setzen, was zu geänderten Parametern inline in der Simulation führt. Prinzipiell sind als Darstellungsparameter auch eine Soll-Zeit, ein Soll-Druck und/oder eine Soll-Geschwindigkeit denkbar.

Anstelle des Interaktionselements sind prinzipiell auch andere interaktive Eingabemöglichkeiten denkbar, wie z.B. die Eingabe einer Prozentzahl oder eines Schneckenwegs. Das Interaktionselement simuliert z.B. die Stelle des Schneckenwegs, wobei die Simulation die entsprechende Fließfrontdarstellung liefert. Interagiert der Bediener mit dem Interaktionselement, indem er das Interaktionselement z.B. auf die Hälfte des Schneckenwegs einstellt, wird die Fließfrontdarstellung z.B. bei halbgefülltem Formhohlraum dargestellt. Wird die Fließfrontdarstellung z.B. über die Zeit visualisiert, erhält man eine zeitlich anwachsende Ausbreitungs-Geometrie und somit quasi eine Verfilmung des sich bildenden Bauteils.

Um eine möglichst gute Qualität des Spritzteils zu erreichen, wird das Soll-Einspritzprofil mittels wenigstens einer dem Konstruktions- und Maschinen-Expertenwissen bekannten dynamischen Eigenschaft der realen Einspritzachse so normiert, dass wenigstens ein in der Simulation errechneter Parameter, z.B. eine Gesamteinspritzzeit oder ein Druck am Ende des Einspritzvorgangs, als Randbedingung unter Beibehaltung des berechneten Soll-Einspritzprofils bestmöglich erreicht wird. Z.B. werden die in der Maschinensteuerung bekannten dynamischen Eigenschaften der realen Einspritzachse so normiert, dass die in der Simulation berechnete Einspritzzeit als Randbedingung bestmöglich erreicht wird unter Beibehaltung des berechneten relativen Soll-Einspritzverlaufs. Dies kann z.B. durch eine Profilverschiebung und/oder Profilskalierung erreicht werden.

Wird z.B. ein Einspritzprofil berechnet, das die Maschine jedoch aufgrund ihrer Maschinencharakteristik nicht ausführen kann, kann dieses Einspritzprofil anschließend z.B. verschoben und/oder verzerrt werden, sodass z.B. der Anfangs- und Endpunkt des Einspritzprofils z.B. bei Geschwindigkeit = 0 liegen. Randbedingung hierbei ist z.B. die Gesamteinspritzzeit. Z.B. ist aufgrund der Fließweglänge der einzuspritzenden Masse bei dünnwandigen Spritzteilen nur eine Gesamteinspritzzeit von 0,1 Sekunden zulässig. Es kann somit versucht werden, z.B. die Gesamteinspritzzeit als Randbedingung durch eine Verschiebung und/oder Verzerrung des Einspritzprofils zu erreichen.

Vorzugsweise erfolgt das Berechnen und Umrechnen auf maschinenspezifische Einstellparameter vor der Durchführung einer ersten Herstellung eines Spritzteils, um vorteilhaft dadurch die Rüstzeit der Maschine zu verkürzen und schnell qualitativ hochwertige Gutteile als Spritzteile herzustellen.

Um vorteilhaft etwaige Fehler frühzeitig und schnell zu erkennen, diese aufzuzeigen und einzugreifen, wird ein Spritzgusszyklus ausgeführt und wenigstens ein Prozessparameter aufgezeichnet, der synchron mit dem aus der Simulation berechneten Fließfrontverlauf in Real-Time dargestellt wird. Z.B. wird die Real-Time-Darstellung bevorzugt auf der Maschinensteuerung visualisiert.

Um vorteilhaft eine einfache Bedienung der Simulation zu erreichen, wird die Real-Time-Darstellung auf der Maschinensteuerung gespeichert und, vorzugsweise durch interaktives Bedienen, mit dem Fließfrontverlauf des Spritzgießmaterials bezüglich der Geometrie aus der Simulation verglichen. Dem Bediener wird bevorzugt durch eine interaktive Bedienung, z.B. Touchen, Streichen der Inlinesimulation die vereinfachte grafische Möglichkeit geboten, seine Prozesseinstellungen in der Maschine für ein Abmustern der ersten Füllprozesse durch Betätigen des Interaktionselements interaktiv vorzugeben und so den Prozess auf der Maschine intuitiv zu steuern und/oder zu parametrieren.

Für eine erhöhte Übersichtlichkeit zwischen Steuerung und Simulation wird die Simulation mittels des Simulationsprogramms vorzugsweise auf der Maschinensteuerung durchgeführt. Prinzipiell kann die Simulation aber auch an einem anderen Ort, z.B. einem Computer oder in einem Netzwerk durchgeführt werden und lediglich das Simulationsergebnis auf der Maschinensteuerung angezeigt werden.

Wenn der Bediener ausgehend vom vorgeschlagenen maschinenspezifischen Einstellparametersatz zur weiteren Optimierung maschinenseitig Einstellparameter ändern möchte, die sich auf das Füllverhalten auswirken, müsste zunächst eine neue Simulation durchgeführt werden, um das Füllverhalten der Simulationsansicht auf der Maschine dem realen Spritzgießprozess nachzuführen. Eine Rückrechnung der erforderlichen Parameter für die Simulation, die im Spritzgießprozessergebnis den Einstellparametern der Maschine gleichkommen, ist physikalisch nicht möglich.

Ein Struktursimulationsmodell ist eine Möglichkeit, dieses Problem ggfs. zu beheben.

Um den Bediener bei Änderungen der Einstellparameter die Ergebnisse in der integrierten Simulation intuitiv und schnell als Bedienhilfe anzuzeigen, wird bevorzugt nach der Durchführung der Simulation ein Struktursimulationsmodell gebildet. Das Struktursimulationsmodell wird für typische vom Bediener anwählbare Parameterklassen, z.B. Geschwindigkeitsprofil Einspritzen, Werkzeugtemperaturen gebildet, um dem Bediener bei eigener Änderung der Einstellparameter die Ergebnisse in der Simulation intuitiv und schnell als Bedienhilfe anzuzeigen, bevor ein Einstellparameter geändert wird. Es ist so vorteilhaft möglich, Auswirkungen einer Änderung von Einstellparametern zu untersuchen, bevor ein Spritzgussprozess gestartet wird. Da z.B. die Lösung einer Wärmeleitungsdifferenzialgleichung (DGL) mit dem Simulationsprogramm sehr zeitintensiv ist, kann vorteilhaft mittels des Struktursimulationsmodells die Grundlösung der DGL auf eine Matrixmultiplikation reduziert werden. Die Matrixelemente enthalten z.B. die Lösung der Temperaturfunktionen aus der DGL. Wird nun z.B. der Schneckenweg geändert, kann mit Hilfe des Struktursimulationsmodells durch eine einfache Matrixmultiplikation z.B. eine neue Füllfront berechnet werden, ohne dass die komplette, zeitintensive Berechnung durch das Simulationsprogramm erneut erfolgen muss.

Um eine möglichst genaue und zielgerichtete Einstellung der Parameter zu erhalten, ist das Struktursimulationsmodell beim Betrieb der Spritzgießmaschine zur Herstellung von Spritzteilen lernend insbesondere in dem Sinn, dass über den Bediener und/oder auch durch angeschlossene integrierte oder externe Qualitätssysteme eine Rückmeldung der in der Simulation vorausberechneten Eigenschaften erfolgt. Merkt sich das Struktursimulationsmodell z.B., ob mit einer entsprechenden Einstellung von Parametern ein Spritzteil mit der gewünschten Qualität hergestellt werden konnte. Wird später versucht, ein ähnliches Spritzteil herzustellen, ist es denkbar, dass das Struktursimulationsmodell die Einstellungen des bereits gefertigten Spritzteils dem Bediener vorschlägt.

Eine weitere Möglichkeit, vorteilhaft die Rückrechnung zu vermeiden, besteht darin, bevorzugt immer nur in Richtung von Simulation zu Maschine zu rechnen. Im Rahmen eines Assistenten bearbeitet der Bediener konsequent immer nur die Simulationsparameter, nicht die Maschineneinstellparameter. Jede Änderung an den Simulationsparametern führt zu einer berechneten Änderung der Maschinenparameter, die bevorzugt z.B. in einem anderen Bereich der Bedienoberfläche angesiedelt sein können und den Bediener in dieser Phase nicht unbedingt interessieren. Das Ergebnis der Optimierung zeigt sich bevorzugt z.B. nach Beenden des Assistenten, z.B. in einem Einspritzprofil (Maschine), das von dem durch den Bediener eingestellten Füllprofil (Simulation) abweicht. Das Einspritzprofil beinhaltet die maschinenspezifischen konstruktiven Besonderheiten, das Füllprofil ist universal für das Formteil als maschinenunabhängig zu betrachten.

Bevorzugt wird die Simulation durch wenigstens einen aus einem realen Spritzgießprozess aufgezeichneten komplementären Ist-Parameter geschärft, wodurch sich vorteilhaft eine maximale Stabilität und Modellsicherheit ergibt. Z.B. wird bei einem vorgegebenen Einspritzvolumenstrom der Einspritzdruck gemessen. Diese Druckkurve wird dann rückwärts vergleichend in die Simulation gegeben und dazu wird ein erneutes Einspritzprofil errechnet. Dies geschieht solange rekursiv bis die Simulation und der gefahrene Spritzgießprozess im besten Fall identisch oder innerhalb eines vorzugsweise vorher bestimmten Fehlerrahmens sind. Im Anschluss werden dann Auswirkungen auf Bauteileigenschaften aus Simulation und Spritzgießprozess verglichen. Man erhält so im Falle einer Übereinstimmung eine maximale Stabilität und Modellsicherheit.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig.1: ein Verfahrensablaufdiagramm,
- Fig.2: ein bevorzugtes Verfahrensablaufdiagramm,
- Fig.3: eine Darstellung der Simulation auf der Maschinensteuerung bei einem Schneckenweg von 50%,
- Fig.4: eine Darstellung der Simulation auf der Maschinensteuerung bei einem Schneckenweg von 80%,
- Fig.5: eine Darstellung der Simulation auf der Maschinensteuerung bei einem Schneckenweg von 100%.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Das im Ausführungsbeispiel der Figuren dargestellte Verfahren dient zur Einstellung von wenigstens einem Parameterprofil zur Steuerung einer in Zyklen arbeitenden Spritzgießmaschine zur Verarbeitung von Kunststoffen und anderen plastifizierbaren Materialien. Dazu werden wenigstens ein 3D-Modell wenigstens einer Geometrie wenigstens eines zu spritzenden Spritzteils und/oder wenigstens einer Geometrie wenigstens eines Formhohlraums und wenigstens ein Simulationsprogramms zur Simulation der Herstellung des wenigstens einen Spritzteils auf der Spritzgießmaschine und/oder der Füllung des wenigstens einen Formhohlraums bereitgestellt und/oder ausgewählt. Zusätzlich werden Informationen über wenigstens ein Spritzgießmaterial mit wenigstens einem Verarbeitungsparameter bereitgestellt und/oder ausgewählt. Damit wird wenigstens eine Simulation bezüglich der wenigstens einen Geometrie mittels des Simulationsprogramms durchgeführt.

Anhand der Simulation wird in Abhängigkeit des Spritzgießmaterials wenigstens ein maschinenunabhängiger Prozessparameterprofil berechnet, wobei der berechnete Prozessparameter für einen "idealisierten" Spritzgießprozess auf einer "idealen" Spritzgießmaschine konfiguriert ist. Dieses maschinenunabhängige Prozessparameterprofil wird dann in wenigstens einen maschinenspezifischen Einstellparameter für eine Voreinstellung des wenigstens einen Parameterprofils zur Steuerung einer realen Spritzgießmaschine unter Anwendung eines Konstruktions- und Maschinen-Expertenwissens (im Folgenden auch kurz "Expertenwissen") umgerechnet, das die konstruktiven Besonderheiten und/oder Beschränkungen der realen Spritzgießmaschine berücksichtigt. Die reale Spritzgießmaschine wird mit dieser Voreinstellung des wenigstens einen Parameterprofils zur Herstellung des wenigstens einen Spritzteils und/oder zur Füllung des wenigstens einen Formhohlraums betrieben.

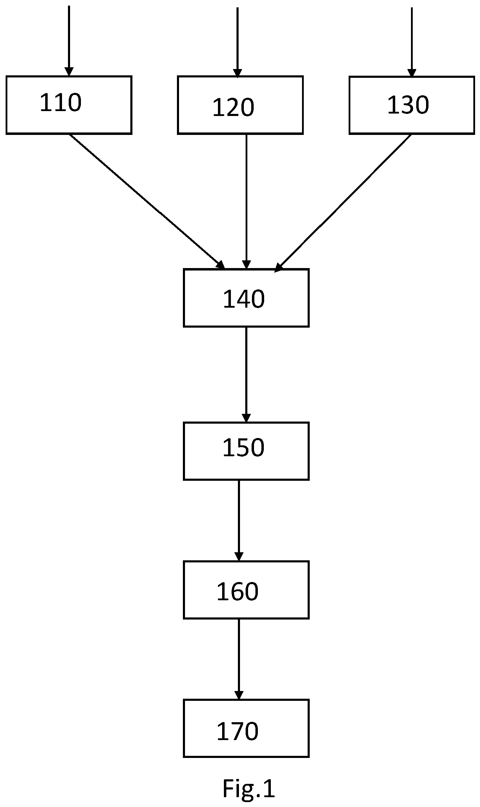

Im Verfahrensablaufdiagramm der Fig. 1 wird in einem Schritt 110 wenigstens ein 3D-Modell wenigstens einer Geometrie wenigstens eines zu spritzenden Spritzteils und/oder wenigstens einer Geometrie wenigstens eines Formhohlraums bereitgestellt und/oder ausgewählt. Das 3D-Modell kann dabei neu bereitgestellt werden, z.B. über eine Schnittstelle, und/oder es kann z.B. bereits auf der Maschinensteuerung der Spritzgießmaschine oder an einem anderen Ort z.B. in einem Netzwerk vorhanden sein, sodass es vorzugweise über eine Schnittstelle z.B. aus mehreren bereits vorhanden bzw. gespeicherten 3D-Modellen ausgewählt werden kann. Das 3D-Modell kann z.B. Daten über die Kavität, die Anzahl der Teile im Werkzeug, den Angusspunkt, den Angussverteiler sowie über das Heißkanal System aufweisen.

Im Schritt 120 in Fig. 1 wird wenigstens ein Simulationsprogramm zur Simulation der Herstellung des wenigstens einen Spritzteils auf der Spritzgießmaschine und/oder der Füllung des wenigstens einen Formhohlraums bereitgestellt und/oder ausgewählt. Wie bei Schritt 110 beschrieben, kann das Simulationsprogramm ebenfalls neu bereitgestellt werden und/oder es kann z.B. bereits auf der Maschinensteuerung der Spritzgießmaschine oder an einem anderen Ort z.B. in einem Netzwerk vorhanden sein, sodass es vorzugweise über eine Schnittstelle z.B. aus mehreren bereits vorhanden bzw. gespeicherten Simulationsprogrammen ausgewählt werden kann. Als Simulationsprogramm ist z.B. ein Füllsimulationsprogramm denkbar.

In einem weiteren Schritt 130 in Fig. 1 werden Informationen über wenigstens ein Spritzgießmaterial mit wenigstens einem Verarbeitungsparameter bereitgestellt und/oder ausgewählt. Wie bereits bei Schritt 110 oder Schritt 120 beschrieben, kann diese Information ebenfalls neu bereitgestellt werden und/oder sie kann z.B. bereits auf der Maschinensteuerung der Spritzgießmaschine oder an einem anderen Ort z.B. in einem Netzwerk vorhanden sein, sodass es vorzugsweise über eine Schnittstelle z.B. aus mehreren bereits vorhandenen bzw. gespeicherten Spritzgießmaterialien ausgewählt werden kann. Z.B. können die Informationen über die Spritzgießmaterialien sowie deren Verarbeitungsparameter aus einem entsprechenden Datenblatt entnommen werden.

Die Schritte 110, 120 und 130 sind in ihrer Reihenfolge beliebig durchführbar. In einem bevorzugten Ausführungsbeispiel wird zunächst Schritt 110, dann Schritt 120 und dann Schritt 130 durchgeführt. Z.B. können die Schritte über eine Schnittstelle durch Interaktion mit dem Bediener ausgeführt werden. Dabei kann der Bediener neue 3D-Modelle, Simulationsprogramme und Informationen über die Spritzgießmaterialien bereitstellen, z.B. als Datei und/oder z.B. aus einem Pool in der Maschinensteuerung oder einem Netzwerk auswählen.

Wurden die Schritte 110, 120 und 130 ausgeführt, wird anhand dieser Eingaben in Schritt 140 wenigstens eine Simulation bezüglich der wenigstens einen Geometrie mittels des Simulationsprogramms durchgeführt. Die Simulation kann manuell und/oder automatisch z.B. nach Bereitstellung der Information über das Spritzgießmaterial gestartet werden. Prinzipiell denkbar ist auch, dass bereits ein Simulationsprogramm vorgegeben ist und dem Simulationsprogramm lediglich das 3D-Modell und die Information über das Spritzgießmaterial vorgegeben werden müssen.

In einem weiteren Schritt 150 wird wenigstens ein maschinenunabhängiges Prozessparameterprofil aus der Simulation berechnet. Es können z.B. das Volumen des Formhohlraums, notwendige Fließdrücke in Bezug auf den Angusspunkt, Andruckhöhen, um die Schwindung des Materials beim Erkalten auszugleichen, Nachdruck- und Kühlzeiten, bis das Material unter den Erstarrungspunkt gekühlt ist, als maschinenunabhängige Parameter als Profil z.B. über die Zeit oder den Weg des Fördermittels berechnet werden. Die Simulation berechnet in gewisser Weise einen maschinenunabhängigen, vom Spritzgießmaterial abhängigen Parameter für einen "idealisierten" Spritzgießprozess zur Ausführung auf einer "idealen" Spritzgießmaschine.

Im folgenden Schritt 160 wird das wenigstens eine maschinenunabhängige Parameterprofil in wenigstens einen maschinenspezifischen Einstellparameter für eine Voreinstellung des wenigstens einen Parameterprofils zur Steuerung der tatsächlich verwendeten realen Spritzgießmaschine mittels eines Konstruktions- und Maschinen-Expertenwissens umgerechnet, das die konstruktiven Besonderheiten und/oder Beschränkungen einer realen Spritzgießmaschine berücksichtigt. Das Expertenwissen kann z.B. den Schneckendurchmesser, den Hub der Rückstromsperre, um den Dosierweg und den Dekompressionsweg als Einstellparameter in der Steuerung zu erhalten, die Verteilung der Zylindertemperaturen auf die verschiedenen Zonen durch internes Wissen über die Modellzusammenhänge von Schneckengeometrie zur Schmelztemperatur beim Dosieren zusammen mit einer Voreinstellung des Staudrucks und der Dosierdrehzahl umfassen. Ebenso sind diesem Expertenwissen vorzugsweise der Ausbaugrad der jeweiligen Spritzgießmaschine als auch deren Ausbaumöglichkeiten bekannt. Letzteres kann auch dazu genutzt werden, um dem Benutzer eventuell noch mögliche alternative Ausbaustufen seiner Spritzgießmaschine zu verdeutlichen.

Die Umrechnung kann bevorzugt z.B. auf der Maschinensteuerung durchgeführt werden oder auch auf einem Computer oder in einem Netzwerk. Ebenfalls kann das Expertenwissen in der Maschinensteuerung auf einem Computer oder in einem Netzwerk abgelegt sein. Der "idealisierte" Spritzgießprozess wird durch die im Expertenwissen enthaltenen Vorgaben der real verwendeten Spritzgießmaschine beeinflusst und ggf. verändert.

Die durch die Umrechnung erhaltenen Einstellparameter werden in einem weiteren Schritt 170 für eine Voreinstellung des wenigstens einen Parameterprofils zur Steuerung der Spritzgießmaschine verwendet. Beispielsweise kann der durch die Umrechnung erhaltene Einstellparameter manuell oder automatisch z.B. in der Maschinensteuerung eingegeben bzw. übernommen werden. Die reale Spritzgießmaschine wird dann mit der Voreinstellung des wenigstens einen Parameterprofils zur Herstellung des wenigstens einen Spritzteils und/oder zur Füllung des wenigstens einen Formhohlraums betrieben.

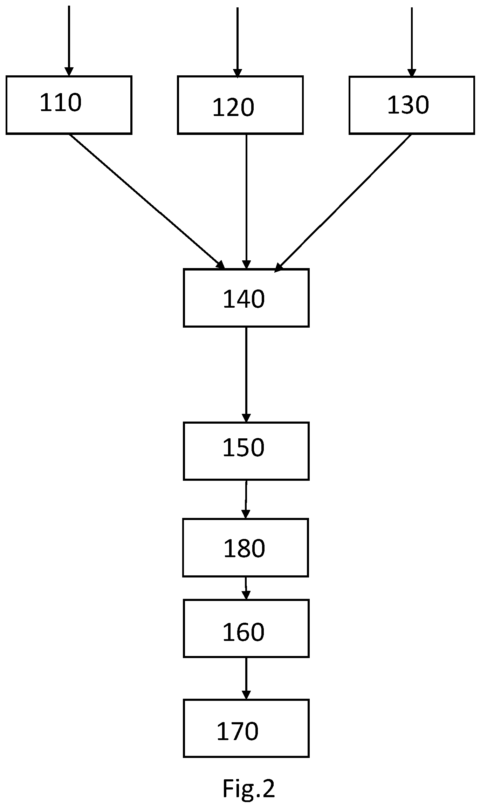

In einem bevorzugten Ausführungsbeispiel gemäß Fig. 2 erfolgt das Umrechnen des wenigstens einen maschinenunabhängigen Prozessparameterprofils in wenigstens einen maschinenabhängigen Einstellparameter so, dass wenigstens ein Prozessparameter als Randbedingung bestmöglich erreicht wird. Bevorzugt kann in einem Schritt 180 der Bediener wenigstens eine Randbedingung vorgeben, z.B. dass ein Prozessparameter, z.B. die Zykluszeit, bestmöglich erreicht werden soll. Die Umrechnung in Schritt 160 erfolgt dann so, dass in Schritt 170 entsprechende Einstellparameter, welche die Zykluszeit beeinflussen, z.B. die Geschwindigkeit der Schnecke, entsprechende Werte annehmen. Bevorzugt werden bei der Umrechnung die Möglichkeiten der Spritzgießmaschine mittels des Expertenwissens beachtet. So lässt sich vorteilhaft der Spritzgießprozess je nach Wunsch des Bedieners bestmöglich einstellen.

In einem weiteren bevorzugten Ausführungsbeispiel wird mittels der Simulation ein Fließfrontverlauf des Spritzgießmaterials bezüglich der Geometrie mithilfe wenigstens eines Soll-Schmelze-Volumenstroms berechnet. So kann z.B. der so berechnete Fließfrontverlauf auf der Maschinensteuerung dargestellt werden. Z.B. zeigt die Simulation an, wie sich der Formhohlraum über die Zeit füllt und/oder wie sich die Fließfront über die Zeit bewegt.

Mittels des Fließfrontverlaufs wird in einem weiteren Ausführungsbeispiel ein Soll-Einspritzprofil berechnet. Z.B. ergibt sich aus dem Fließfrontverlauf eine Volumenmenge pro Zeiteinheit, welche in das Soll-Einspritzprofil umgerechnet werden kann. Bei dem Soll-Einspritzprofil kann es sich z.B. um ein Soll-Einspritzgeschwindigkeitsprofil der Schnecke handeln. Das Soll-Einspritzprofil wird maschinenunabhängig berechnet, d.h. in der Praxis wird es durch die Randbedingungen und Möglichkeiten der Maschine, welche z.B. im Expertenwissen bekannt sind, nicht beeinflusst und verändert.

Bevorzugt wird das Soll-Einspritzprofil auf der Maschinensteuerung als Füllsimulation dargestellt. Z.B. zeigt die Simulation, wie sich der Hohlraum über die Zeit füllt und/oder wie sich die Fließfront über die Zeit bewegt.

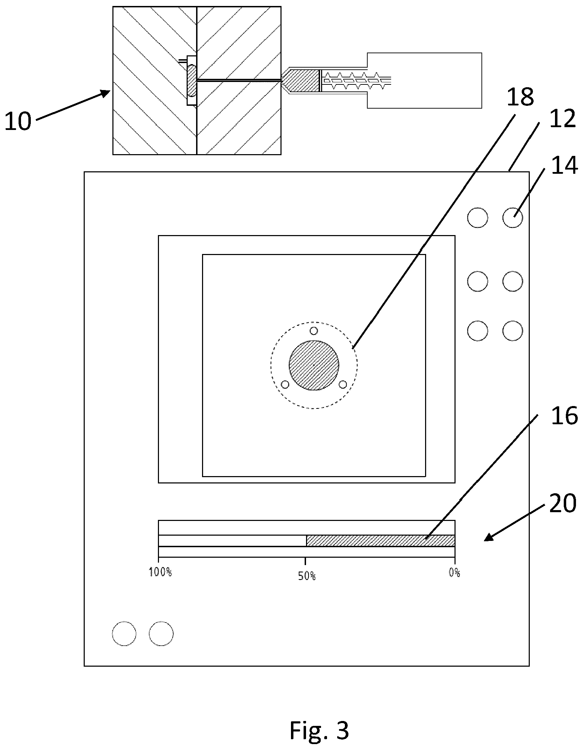

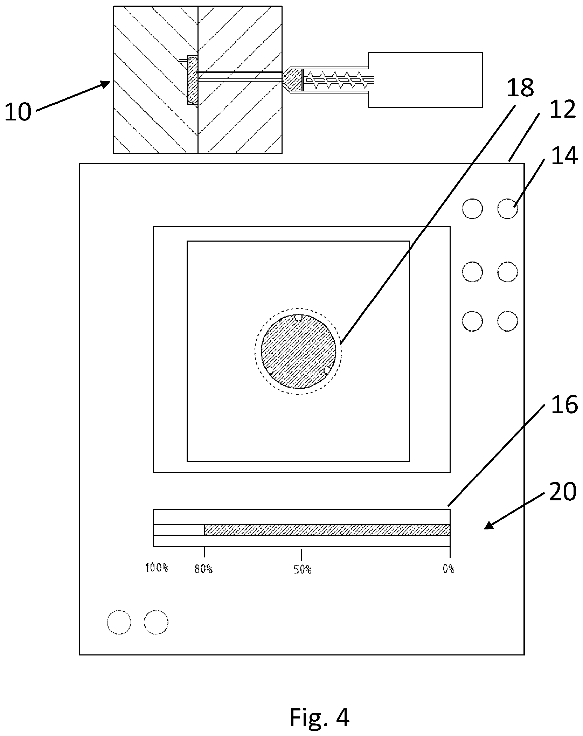

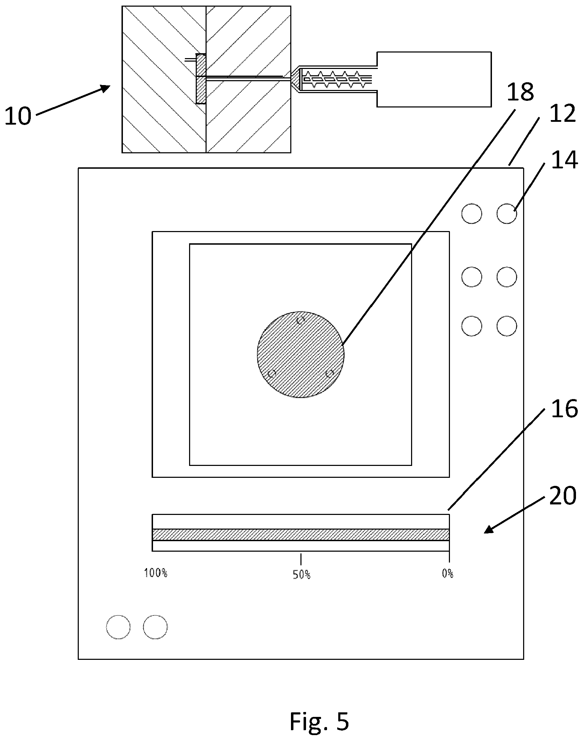

Im Ausführungsbeispiel der Fig. 3, 4 und 5 wird der mittels der Simulation berechnete Fließfrontverlauf mittels des Expertenwissens in eine Soll-Fließfrontausbreitungs-

Geometrie 18 mit wenigstens einem Darstellungsparameter 16 verrechnet und in der Maschinensteuerung 12 zur Inline-Simulation dargestellt. Der Darstellungsparameter 16 ist im Ausführungsbeispiel in den Fig. 3, 4 und 5 jeweils z.B. der Soll-Schneckenweg. Über ein Interaktionselement 20, beispielsweise einen Schieberegler, kann der Bediener z.B. den Schneckenweg einstellen und sich so das Spritzteil auf einem Display der Maschinensteuerung 12 zum jeweiligen Punkt des Schneckenwegs anzeigen lassen. Grundsätzlich ist aber eine Normierung auch auf einen anderen Parameter wie z.B. die Einspritzzeit möglich.

In Fig. 3, 4 und 5 ist der Schneckenweg z.B. auf 50, 80 und 100 Prozent eingestellt. Zum besseren Verständnis ist dort ein Spritzgießprozess 10 mit entsprechenden Schneckenpositionen dargestellt. Je nachdem ergibt sich ein teilgefülltes oder fertig gefülltes Spritzteil.

Z.B. lässt sich so auch ein nur teilgefülltes Spritzteil fertigen. Auch kann der Bediener an einer Position des Darstellungsparameters 16 und/oder des Interaktionselements 20 Parameter ändern und so den Spritzgießprozess verändern und steuern. Z.B. ist es möglich, dass der von der Simulation berechnete Fließfrontverlauf in Bezug zum Soll-Schmelze-Volumenstrom mittels des in der Maschine vorhandenen Schneckendurchmessers und des Expertenwissen über die Funktion der Rückstromsperre in eine Soll-Fließfrontausbreitungs-Geometrie mit einem Soll-Schneckenweg als Darstellungsparameter verrechnet wird und in der Steuerung zur Inline-Simulation mittels des Schiebereglers darstellbar gemacht wird. So lässt sich z.B. eine automatische Einstellung der Maschine für eine Teilfüllung der Kavität erhalten, wobei der gewünschte Füllgrad mit Hilfe des dargestellten Füllbilds vorgegeben wird. Weiterhin ist es möglich, den Einspritzvorgang im laufenden Automatikzyklus zu dem vom Bediener gewünschten Füllgrad zu stoppen.

Bevorzugt wird das Soll-Einspritzprofil mittels wenigstens einer dem Expertenwissen bekannten dynamischen Eigenschaft der realen Einspritzachse so normiert, dass wenigstens ein in der Simulation berechneter Parameter als Randbedingung unter Beibehaltung des berechneten Soll-Einspritzprofils bestmöglich erreicht wird.

Vorzugsweise erfolgen die Simulation und das Berechnen und Umrechnen vor der Durchführung einer ersten Herstellung eines Spritzteils, um dadurch die Rüstzeit der Maschine zu verkürzen und schnell qualitativ hochwertige Gutteile als Spritzteile herzustellen.

In einem bevorzugten Ausführungsbeispiel wird wenigstens ein Spritzgießprozess ausgeführt und wenigstens ein Prozessparameter aufgezeichnet, der synchron mit dem aus der Simulation berechneten Fließfrontverlauf in Real-Time dargestellt wird.

Die Real-Time-Darstellung wird bevorzugt auf der Maschinensteuerung gespeichert und mit dem Fließfrontverlauf des Spritzgießmaterials bezüglich der Geometrie aus der Simulation verglichen. Dadurch können Abweichungen des gewünschten Füllverlaufs vom realen Füllverlauf, z.B. infolge von Störungen oder Prozessschwankungen, erkannt und entsprechende Maßnahmen ergriffen werden.

Die Simulation wird bevorzugt mittels des Simulationsprogramms auf der Maschinensteuerung durchgeführt. Prinzipiell ist es denkbar, die Simulation auch an einem anderen Ort durchzuführen, beispielsweise auf einem Computer oder in einem Netzwerk.

Wenn der Bediener ausgehend vom vorgeschlagenen maschinenspezifischen Einstellparametersatz zur weiteren Optimierung maschinenseitig Einstellparameter ändern möchte, die sich auf das Füllverhalten auswirken, müsste zunächst eine neue Simulation durchgeführt werden, um das Füllverhalten der Simulationsansicht auf der Maschine dem realen Spritzgießprozess nachzuführen. Eine Rückrechnung der erforderlichen Parameter für die Simulation, die im Spritzgießprozessergebnis den Einstellparametern der Maschine gleichkommen, ist physikalisch nicht möglich.

Ein Struktursimulationsmodell ist eine Möglichkeit, dieses Problem ggfs. zu beheben.

Nach Durchführung der Simulation wird in einem weiter bevorzugten Ausführungsbeispiel ein Struktursimulationsmodell gebildet, das dem Bediener bei einer Änderung der Einstellparameter Ergebnisse der Simulation anzeigt. Das Struktursimulationsmodell wird für typische vom Bediener anwählbare Parameterklassen (z.B. Einspritzgeschwindigkeitsprofil, Werkzeugtemperaturen, ...) vorzugsweise als Matrix gebildet, um dem Bediener bei eigenen Änderungen der Einstellparameter die Ergebnisse in der integrierten Simulation intuitiv und schnell als Bedienhilfe anzuzeigen.

Das Struktursimulationsmodell kann z.B. eine oder mehrere Wärmeflußgleichungen enthalten. Bei Vorgabe insbesondere, aber nicht nur von Kühlung, Kühlkreislauf, Wärmeübergängen z.B. an den Wandungen des Formhohlraums oder am Einspritzkanal sowie der Wärmeleiteigenschaften des zu verarbeitenden Materials ergibt sich als Simulationsergebnis z.B. ein Füllprofil. Dieses führt zu einer Zeit- oder Druck-Matrix des Volumenmodells mit darin enthaltenen Koeffizienten der Temperatur, des Druckes und des Füllgrads über der Zeit. Damit ergibt sich ein Lösungsraum mit einer Grundlösung der Wärme- und Schwindungsgleichung. Wird die Matrix des Spritzteils mit einem Vektor mit veränderlichen Koeffizienten wie z.B. dem Schneckenweg s(t), der Temperatur ϑ, Materialwerten oder Werten der Werkzeugwandung multipliziert, ergibt sich das gewünschte maschinenspezifische Ergebnis der Einstellparameter.

In einem weiteren bevorzugten Ausführungsbeispiel ist das Struktursimulationsmodell beim Betrieb der Spritzgießmaschine zur Herstellung von Spritzteilen lernend, wobei über den Bediener und/oder durch Qualitätssysteme eine Rückmeldung der in der Simulation vorausberechneten Eigenschaften erfolgt. Soll z.B. die Qualität betrachtet werden, sollte auch eine Nachdruck- und Restkühlphase wegen Schwindung bzw. Verzug simuliert werden. Dies benötigt neben einer realitätsnahen Modellierung der Werkzeugtemperaturen entsprechende Rechenzeit.

Will der Bediener den Einspritzprozess optimieren, ist in einem weiteren bevorzugten Ausführungsbeispiel ein Assistent vorgesehen, mit dessen Hilfe der Bediener Parameter der Simulation ändern kann. Eine Rückrechnung wie oben beschrieben kann dadurch vorteilhaft vermieden werden. Bevorzugt wird daher immer nur in Richtung von Simulation zu Maschine gerechnet. Im Rahmen des Assistenten bearbeitet der Bediener konsequent immer nur die Simulationsparameter, nicht die Maschineneinstellparameter. Jede Änderung an den Simulationsparametern führt zu einer berechneten Änderung der Maschinenparameter, die bevorzugt z.B. in einem anderen Bereich der Bedienoberfläche angesiedelt sein können und den Bediener in dieser Phase nicht unbedingt interessieren. Das Ergebnis der Optimierung zeigt sich bevorzugt z.B. nach Beenden des Assistenten, z.B. in einem Einspritzprofil (Maschine), das von dem durch den Bediener eingestellten Füllprofil (Simulation) abweicht. Das Einspritzprofil beinhaltet die maschinenspezifischen konstruktiven Besonderheiten, das Füllprofil ist universal für das Formteil als maschinenunabhängig zu betrachten.

In einem weiteren bevorzugten Ausführungsbeispiel wird die Simulation durch wenigstens einen aus einem realen Spritzgießprozess aufgezeichneten komplementären Ist-Parameter geschärft, wodurch sich vorteilhaft eine maximale Stabilität und Modellsicherheit ergibt. Z.B. wird bei einem vorgegebenen Einspritzvolumenstrom der Einspritzdruck gemessen. Danach wird diese Druckkurve dann rückwärts mit der Simulation verglichen. Stimmen die Kurven nicht überein oder stimmen die Kurven innerhalb eines bestimmten Fehlerrahmens nicht überein, wird die Druckkurve in die Simulation gegeben und es wird ein erneutes Einspritzprofil errechnet. Dies geschieht solange rekursiv, bis die Simulation und der gefahrene Spritzgießprozess im besten Fall identisch oder innerhalb eines bevorzugt vorher bestimmten Fehlerrahmens sind. Im Anschluss werden dann Auswirkungen auf Bauteileigenschaften aus Simulation und Spritzgießprozess verglichen. Man erhält so im Falle einer Übereinstimmung eine maximale Stabilität und Modellsicherheit.

### Bezugszeichenliste

- 10: Spritzgießprozess
- 12: Maschinensteuerung
- 14: Interaktionselement
- 16: Darstellungsparameter
- 18: Soll-Fließfrontausbreitungs-Geometrie
- 20: Interaktionselement
- 110: Schritt
- 120: Schritt
- 130: Schritt
- 140: Schritt
- 150: Schritt
- 160: Schritt
- 170: Schritt
- 180: Schritt

## Patentansprüche

1. Verfahren zur Einstellung von wenigstens einem Parameterprofil zur Steuerung einer in Zyklen arbeitenden Spritzgießmaschine zur Verarbeitung von Kunststoffen und anderen plastifizierbaren Materialien mit den Schritten:
- Bereitstellen und/oder Auswählen wenigstens eines 3D-Modells wenigstens einer Geometrie wenigstens eines zu spritzenden Spritzteils und/oder wenigstens einer Geometrie wenigstens eines Formhohlraums,
- Bereitstellen und/oder Auswählen wenigstens eines Simulationsprogramms zur Simulation der Herstellung des wenigstens einen Spritzteils auf der Spritzgießmaschine und/oder der Füllung des wenigstens einen Formhohlraums,
- Bereitstellen und/oder Auswählen von Informationen über wenigstens ein Spritzgießmaterial mit wenigstens einem Verarbeitungsparameter,
- Durchführen wenigstens einer Simulation bezüglich der wenigstens einen Geometrie mittels des Simulationsprogramms,
**gekennzeichnet durch**
- Berechnen von wenigstens einem maschinenunabhängigen Prozessparameterprofil aus der Simulation in Abhängigkeit des Spritzgießmaterials, wobei der berechnete Prozessparameter für einen "idealisierten" Spritzgießprozess auf einer "idealen" Spritzgießmaschine konfiguriert ist,
- Umrechnen des wenigstens einen maschinenunabhängigen Prozessparameterprofils in wenigstens einen maschinenspezifischen Einstellparameter für eine Voreinstellung des wenigstens einen Parameterprofils zur Steuerung einer realen Spritzgießmaschine unter Anwendung eines Konstruktions- und Maschinen-Expertenwissens, das die konstruktiven Besonderheiten und/oder Beschränkungen der realen Spritzgießmaschine berücksichtigt,
- Betreiben der realen Spritzgießmaschine mit der Voreinstellung des wenigstens einen Parameterprofils zur Herstellung des wenigstens einen Spritzteils und/oder zur Füllung des wenigstens einen Formhohlraums.

2. Verfahren nach Anspruch 1, **dadurch gekennzeichnet, dass** das Umrechnen des wenigstens einen maschinenunabhängigen Prozessparameterprofils in den wenigstens einen maschinenspezifischen Einstellparameter so erfolgt, dass wenigstens ein Prozessparameter als Randbedingung bestmöglich erreicht wird.

3. Verfahren nach Anspruch 1 oder 2, **dadurch gekennzeichnet, dass** mittels der Simulation ein Fließfrontverlauf des Spritzgießmaterials bezüglich der Geometrie mithilfe wenigstens eines Soll-Schmelze-Volumenstroms berechnet wird.

4. Verfahren nach Anspruch 3, **dadurch gekennzeichnet, dass** mittels des Fließfrontverlaufs ein Soll-Einspritzprofil berechnet wird.

5. Verfahren nach Anspruch 4, **dadurch gekennzeichnet, dass** das Soll-Einspritzprofil auf einer Maschinensteuerung der Spritzgießmaschine als Füllsimulation dargestellt wird.

6. Verfahren nach einem der Ansprüche 3 bis 5, **dadurch gekennzeichnet, dass** der mittels der Simulation berechnete Fließfrontverlauf mittels des Konstruktions- und Maschinen-Expertenwissens in eine Soll-Fließfrontausbreitungs-Geometrie mit wenigstens einem Darstellungsparameter verrechnet wird und in der Maschinensteuerung zur Inline-Simulation dargestellt wird.

7. Verfahren nach einem der Ansprüche 4 bis 6, **dadurch gekennzeichnet, dass** das Soll-Einspritzprofil mittels wenigstens einer dem Konstruktions- und Maschinen-Expertenwissen bekannten dynamischen Eigenschaft der realen Einspritzachse so normiert wird, dass wenigstens ein in der Simulation berechneter Parameter als Randbedingung unter Beibehaltung des berechneten Soll-Einspritzprofils bestmöglich erreicht wird.

8. Verfahren nach einem der vorhergehenden Ansprüche, **dadurch gekennzeichnet, dass** das Berechnen und Umrechnen vor der Durchführung einer ersten Herstellung eines Spritzteils erfolgt.

9. Verfahren nach einem der Ansprüche 3 bis 8, **dadurch gekennzeichnet, dass** wenigstens ein Spritzgusszyklus ausgeführt wird und wenigstens ein Prozessparameter aufgezeichnet wird, der synchron mit dem aus der Simulation berechneten Fließfrontverlauf in Real-Time dargestellt wird.

10. Verfahren nach Anspruch 9, **dadurch gekennzeichnet, dass** die Real-Time-Darstellung in der Maschinensteuerung gespeichert wird und mit dem Fließfrontverlauf des Spritzgießmaterials bezüglich der Geometrie aus der Simulation verglichen wird.

11. Verfahren nach einem der vorhergehenden Ansprüche, **dadurch gekennzeichnet, dass** die Simulation mittels des Simulationsprogramms auf einer Maschinensteuerung der Spritzgießmaschine durchgeführt wird.

12. Verfahren nach einem der vorhergehenden Ansprüche, **dadurch gekennzeichnet, dass** nach Durchführung der Simulation ein Struktursimulationsmodell gebildet wird, das dem Bediener bei einer vom Bediener vorgenommenen Änderung der Einstellparameter Ergebnisse der Simulation anzeigt.

13. Verfahren nach Anspruch 12, **dadurch gekennzeichnet, dass** das Struktursimulationsmodell beim Betrieb der Spritzgießmaschine zur Herstellung von Spritzteilen lernend ist, wobei über den Bediener und/oder durch Qualitätssysteme eine Rückmeldung der in der Simulation vorausberechneten Eigenschaften erfolgt.

14. Verfahren nach einem der vorhergehenden Ansprüche, **dadurch gekennzeichnet, dass** wenigstens ein Assistent vorgesehen ist, mit dessen Hilfe der Bediener Parameter der Simulation ändern kann.

15. Verfahren nach einem der vorhergehenden Ansprüche, **dadurch gekennzeichnet, dass** die Simulation durch wenigstens einen aus einem realen Spritzgießprozess aufgezeichneten komplementären Ist-Parameter geschärft wird.
